Europäisches Patentamt

European Patent Office

Office européen des brevets

(11) Publication number: **0 203 244**
**B1**

(12) **EUROPEAN PATENT SPECIFICATION**

(45) Date of publication of patent specification: **21.09.88**

(21) Application number: **85830127.8**

(22) Date of filing: **25.05.85**

(51) Int. Cl.⁴: **B 60 K 15/02**

(54) **System for fixing the fuel pump in the fuel tank.**

(43) Date of publication of application:
**03.12.86 Bulletin 86/49**

(45) Publication of the grant of the patent:
**21.09.88 Bulletin 88/38**

(84) Designated Contracting States:
**DE FR GB SE**

(56) References cited:
**EP-A-0 120 343**
**EP-A-0 131 835**
**DE-A-2 440 904**
**DE-A-2 550 950**
**DE-A-2 936 318**
**FR-A-2 391 935**
**FR-A-2 394 472**
**FR-A-2 544 670**
**GB-A-2 043 165**

(73) Proprietor: **FIAT AUTO S.p.A.**
**Corso Giovanni Agnelli 200**
**I-10135 Torino (IT)**

(72) Inventor: **Mazzoleni, Adalberto**
**Corso Francia 9**
**I-10100 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a system for fixing the suction pump directly in the motor vehicle fuel tank, so to avoid external connections between pump and tank and in the meantime to spare room inside the motor vehicle.

Known structures of this type have the whole assembly (pump, connections, filter, electric contacts) grouped in a single block what allows to locate very easily a possible breakdown, and the whole block is fixed to the fuel tank in an easily extractable manner to facilitate the maintenance.

Such an arrangement is previously known from the EP—A—120343, which discloses a system for fixing the fuel pump and its accessories in a container inside the fuel tank, like as specified in the preamble of claim 1.

This system of fixing does not permit to compensate the dimensional differences among the tanks and to avoid vibrations.

Purpose of the present invention is to get an elastic fixing so to compensate the said dimensional differences among the tanks (due to tolerances in working and/or to pressurization).

Another object is to avoid that the whole assembly undergoes too many vibrations.

A further purpose of the present invention is to permit a quick repair of possible breakdowns.

These purposes and others are attained by the present invention, consisting of a system for fixing the fuel pump and its accessories inside the fuel tank, comprising:

a pump (3) provided with a fuel back flow duct (11) and cushioned in an elastic way (4) in a container (1) having a fuel carrying wall (10);

a cap (25) having a diameter larger than the diameter of the container (1) and fitted to close and open in the upper wall of the fuel tank (19),

characterised in that said container (1) is kept in position by an elastic flat spring (23) fixed to the cap (25) and connected to the container by two snap clamps (22).

Further characteristics and advantages of the invention will be apparent from the following description referred to the enclosed drawings given only as non limitative example, in which:

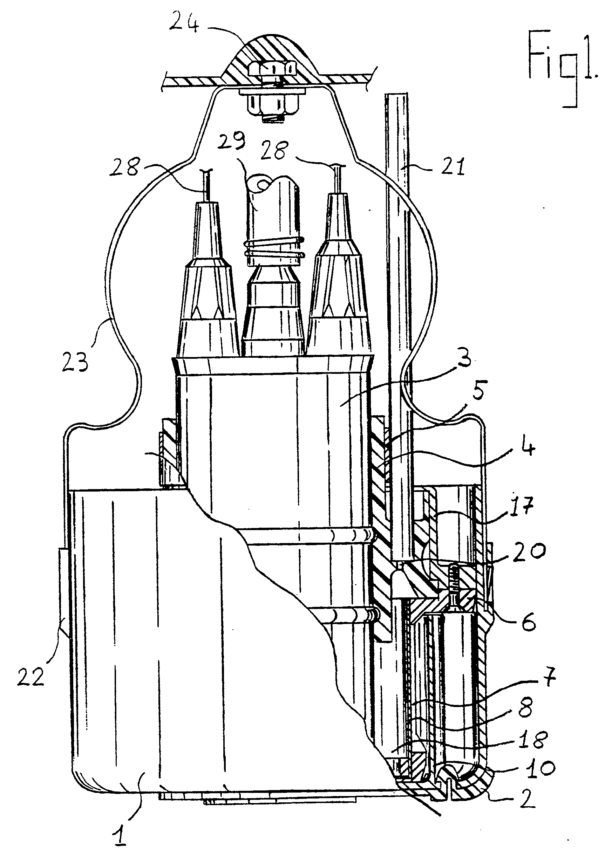

Fig. 1 is a partially sectioned view of the device according to the invention;

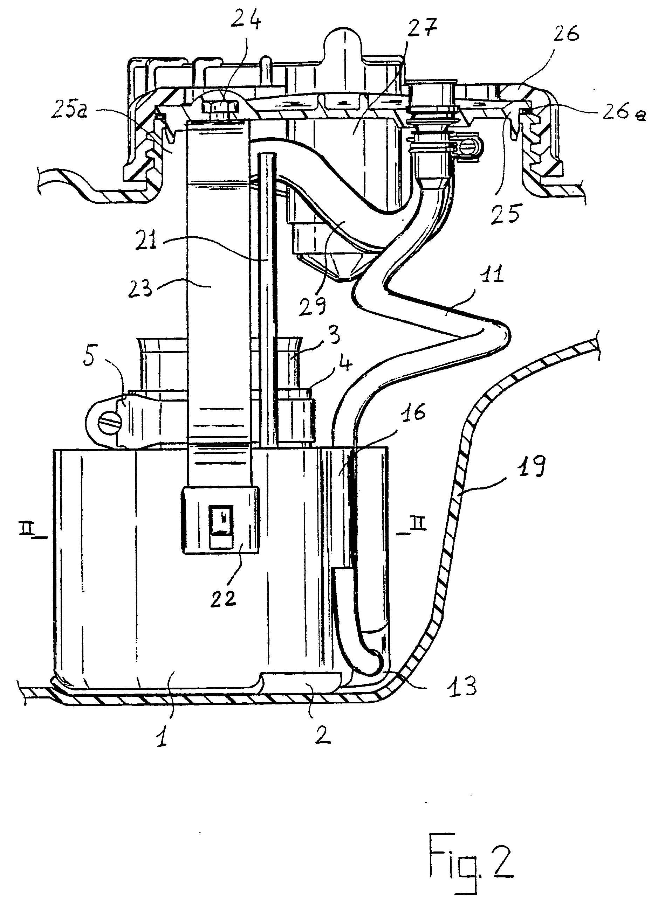

Fig. 2 is a view of the device of Fig. 1 placed inside a tank;

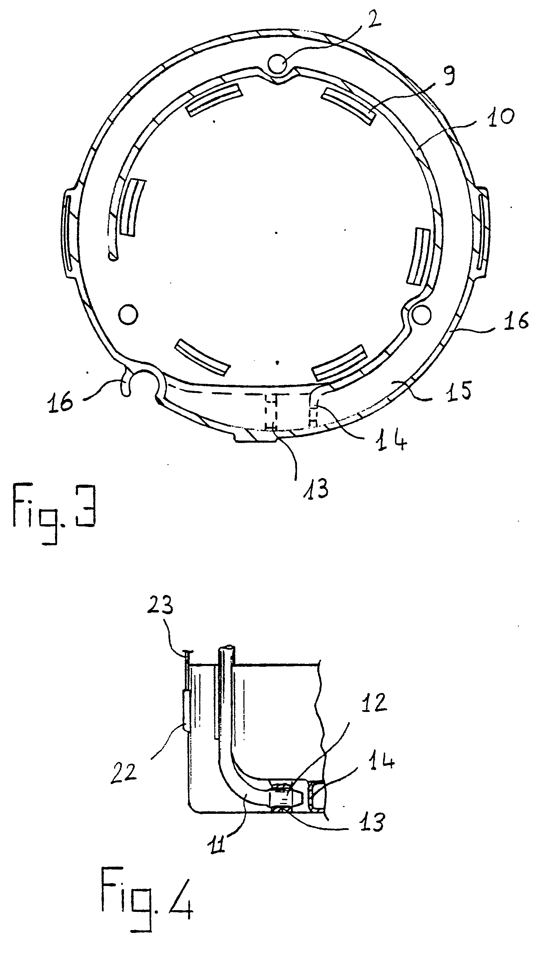

Fig. 3 is a section of a detail of the device along line II—II of Fig. 2;

Fig. 4 is a partially sectioned detail of the device of Fig. 1.

With reference to the Figures, with numeral 1 it is indicated a container in plastic material, fuelproof, of a substantially cylindrical shape and provided on its lower part of a rubber cushion- and antislipping element 2.

Inside the container the electric pump 3 is kept in position by a rubber element 4 completely surrounding it and cooperating with a collar 5 which is tightened on its upper part.

The rubber element 4 is in turn kept in position by a support 6 in plastic material having a substantially cylindrical shape surrounding the end part of the pump and whose side wall is provided with openings 7 protected by a net 8 for fuel filtering.

The support 6 is fastened by snap clamps 9 made in the bottom of the container 1 and it is surrounded by a wall 10 molded with the body 1 carrying the fuel towards the suction pump.

The fuel pumped in excess of the injectors returns through the duct 11 whose end 12 is kept by the support 13 in correspondance of a hole 14 made in the container wall and ending in the room 15 comprised between the container outer wall and the wall 10.

The back flow of the fuel entering into the room 15 causes a suction effect involving also the fuel around the container and keeping the room 15 always full.

The duct 11 is furthermore kept in position by the support 16 molded on the outer wall of the container.

The rubber element 4 is fastened by a plastic cap 17, which, besides being a centering element, avoids, cooperating with the element 4, the non-filtered fuel to enter into the room 18 defined by the pump outer wall and by the inner wall of the support 6.

The room 18 is connected to the air-pocket inside the tank 19 through a hole 20 and a small pipe 21 inserted in a seat made in the element 4, so as avoid the flow of the fuel in the small pipe 21.

The container 1 is connected by two snap clamps 22 to a flat spring 23 in turn connected by a bolt 24 to a cap 25 closing airtight an opening 25a, in which the assembly pump/container is inserted by the nut 26 and the gasket 26a.

Then the container is placed inside the tank in an elastic way: this avoids, with the help of the element 2, that the assembly undergoes too many vibrations.

An air valve 27 (having also a function of safety in case of overturning) fixed on the cap 25, allows the air to flow from and to the tank.

The pump 3, fed through the cables 28, delivers the fuel to the injectors through the duct 29, whose connection is placed on the cap 25, as that of the duct 11.

## Claims

1. System for fixing the fuel pump and its accessories inside the fuel tank, comprising:

a pump (3) provided with a fuel back flow duct (11) and cushioned in an elastic way (4) in a container (1) having a fuel carrying wall (10);

a cap (25) having a diameter larger than the diameter of the container (1) and fitted to close and open in the upper wall of the tank (19),

characterised in that said container (1) is kept in position by an elastic flat spring (23) fixed to the cap (25) and connected to the container by two snap clamps (22).

2. System for fixing ths fuel pump, as set forth in Claim 1, characterised in that said carrying wall (10) forms, with the container outer wall, a room (15) which is in connection with the end of said fuel back flow duct (11) via a hole (14) made in the container wall.

## Patentansprüche

1. Vorrichtung zur Befestigung einer Kraftstoffpumpe mit ihren Zusatzorganen in einem Kraftstofftank, umfassend

eine Pumpe (3), die eine Kraftstoff-Rückflußleitung (11) aufweist und in elastischer Weise (4) in einem Behälter (1) mit einer den Kraftstoff haltenden Wand (10) gelagert ist, sowie

einen Deckel (25), dessen Durchmesser größer als der Durchmesser des Behälters (1) ist und der zum Schließen und Öffnen in die obere Wand des Tanks (19) eingepaßt ist.

dadurch gekennzeichnet, daß der Behälter (1) mittels eines elastischen Federbandes (23), das am Deckel (25) befestigt und über zwei Schnappeingriffsorgane (22) mit dem Behälter (1) verbunden ist, in seiner Lage gehalten wird.

2. Vorrichtung nach Anspruch 1, dadurch gekennzeichnet, daß die den Kraftstoff haltende Wand (10) zusammen mit der Außenwand des Behälters (1) einen Raum (15) bildet, der über eine Öffnung (14) in der Behälterwand in Verbindung mit dem Ende der Kraftstoff-Rückflußleitung (11) ist.

## Revendications

1. Système pour fixer la pompe à carburant et ses accessoires à l'intérieur du réservoir de carburant, comprenant:

une pompe (3) munie d'un conduit de retour de carburant (11) et suspendue par une liaison élastique (4) dans un boîtier (1) qui possède une paroi (10) qui conduit le carburant;

un bouchon (25) possèdant un diamètre supérieur au diamètre du boîtier (1) et monté pour fermer une ouverture de la paroi supérieure du réservoir (19);

caractérisé en ce que ledit boîtier (1) est maintenu en position par un ressort plat élastique (23) fixé au bouchon (25) et relié au boîtier par deux attaches à encliquetage (22).

2. Système pour fixer la pompe à carburant, selon la revendication 1, caractérisé en ce que ladite paroi formant conduite (10) forme, avec la paroi extérieure du boîtier, une chambre (15) qui est en liaison avec l'extrémité dudit conduit de retour de carburant (11), à travers un trou (18) ménagé dans la paroi du boîtier.

Fig1.

Fig. 2

Fig.3

Fig.4